(19) Europäisches Patentamt European Patent Office Office européen des brevets

(11) **EP 3 232 807 B1**

(12) **EUROPEAN PATENT SPECIFICATION**

(45) Date of publication and mention of the grant of the patent:
**15.01.2020 Bulletin 2020/03**

(51) Int Cl.:
*A23K 20/158* (2016.01)   *A23K 20/163* (2016.01)
*A23K 40/25* (2016.01)   *A23K 40/30* (2016.01)
*A23K 50/42* (2016.01)

(21) Application number: **15813406.4**

(22) Date of filing: **17.12.2015**

(86) International application number:
**PCT/EP2015/080257**

(87) International publication number:
**WO 2016/097167 (23.06.2016 Gazette 2016/25)**

(54) **METHOD FOR PRODUCING A PALATABLE COATED DRY PET FOOD**

VERFAHREN ZUR HERSTELLUNG EINES WOHLSCHMECKENDEN TROCKENEN BESCHICHTETEN HAUSTIERFUTTERS

PROCÉDÉ DE PRODUCTION D'UN ALIMENT SEC ENROBÉ DE GOÛT AGRÉABLE, POUR ANIMAUX DE COMPAGNIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2014 EP 14307084**

(43) Date of publication of application:
**25.10.2017 Bulletin 2017/43**

(73) Proprietor: **Spécialités Pet Food**
**56250 Elven (FR)**

(72) Inventor: **BRAMOULLE, Loïc**
**56370 Sarzeau (FR)**

(74) Representative: **Regimbeau**
**20, rue de Chazelles**
**75847 Paris Cedex 17 (FR)**

(56) References cited:
**EP-A1- 1 219 177**      **WO-A1-2012/052425**
**US-A- 5 997 934**      **US-A1- 2014 093 621**
**US-A1- 2014 220 187**      **US-B1- 7 749 552**

• **A.C. CARCIOFI ET AL: "Amylase utilization for the extrusion of dog diets", ANIMAL FEED SCIENCE AND TECHNOLOGY, vol. 177, no. 3-4, 1 November 2012 (2012-11-01), pages 211-217, XP055190667, ISSN: 0377-8401, DOI: 10.1016/j.anifeedsci.2012.08.017**

**Description**

The present invention relates to the field of pet food.

More specifically, the present invention provides a method for producing a palatable coated dry pet food, comprising precooking starting pet food ingredients in a hydrothermal preconditioner; extruding the precooked pet food material in an extruder; drying the resulting pet food extrudate in a dryer; and coating said dry pet food.

BACKGROUND OF THE INVENTION

A high number of pet foods, such as cat and dog foods, is produced by cooking-extrusion.

Generally speaking, a starting ingredient mixture (or feed mixture) containing appropriate amounts of protein, carbohydrates, fat, starch, fiber and minerals is fed to a cooker-extruder which serves to fully cook and form the starting ingredients as a complete food. Such a cooker-extruder typically includes a preconditioner, which serves to specifically precook the starting ingredient mixture, as well as a downstream extruder.

During conventional processing with preconditioners, steam and/or water are injected into the preconditioner housing, and mixing shafts supporting paddles are rotated at a constant speed and at a preset rotational direction. Preconditioners allow mixing homogeneously powders and liquids, to preheat and to prehumidify the feed mixture, and to pregelatinize the starch.

The combination of energy (thermal, hydrothermal, and/or mechanical) may serve to partially gelatinize the starting ingredient mixture passing through the preconditioner, measured as the starch gelatinization rate, but in any event provides needed moisture (either as water or steam) for facilitating downstream extrusion processing.

The downstream extruder generally includes an elongated barrel presenting an inlet coupled with the outlet of the preconditioner, and a downstream, restricted orifice die plate with one or several holes. One or more elongated, axially rotatable, helically flighted screws are situated within the barrel in order to move the precooked pet food material along the length of the barrel, toward and through the outlet die. Typically, the extruder serves to further heat and subject the precooked pet food material to increasing levels of shear within the barrel, with the final cooking and shaping occurring at the die. A rotating knife is normally used to cut the pet food extrudate into pieces of an appropriate size at the end of the die.

Precooking-extrusion technology is widely used in the production of pet foods. In particular, precooking-extrusion methods are used to produce pet foods having properties of interest, in particular having high palatability.

US Patent application No. 5997934 A1 discloses a process for producing cooked cereals or dry pet foods where a mixture of water and dry materials, such as cereal flour or semolina, are cooked and extruded with the aid of a gear pump, without having been previously precooked in a hydrothermal preconditioner.

EP Patent application No. 1219177 A1 relates to an extrusion process for the manufacture of cooked cereals or dry pet food. Again for this process, no precooking is performed.

Carciofi et al. (2012, Animal Feed Science and Technology, 177, 211-217) studies the effects of amylase addition on extruder parameters, cost of extrusion, kibble quality, and digestibility of dog foods. To this end, the diets are processed in a preconditioner before being extruded. However, the parameters used during the precooking step are never detailed.

US patent No. 7749552 B1 relates to extruded products containing a starch-bearing grain, such as corn or wheat, wherein the products are non-sticky and exhibit low cold water viscosities and high cook values. The products are first quickly precooked and then extruded with low-shear conditions.

There is a continuing need for new food products for pets, which provide a robust flavour and are thus of a high palatability, and which are further easily and cost-effectively (i) manufactured by the pet food industry and (ii) usable by pets' owners.

Thus, the present invention here provides a novel precooking-extrusion-based method for the production of palatable dry pet foods.

SUMMARY OF THE INVENTION

It is provided herein a method for producing a palatable coated dry pet food.

It is further described a palatable coated dry pet food obtainable by said method.

It is yet further described pet food products as intermediates obtainable by said method for producing such a palatable coated dry pet food.

LEGEND OF THE FIGURE

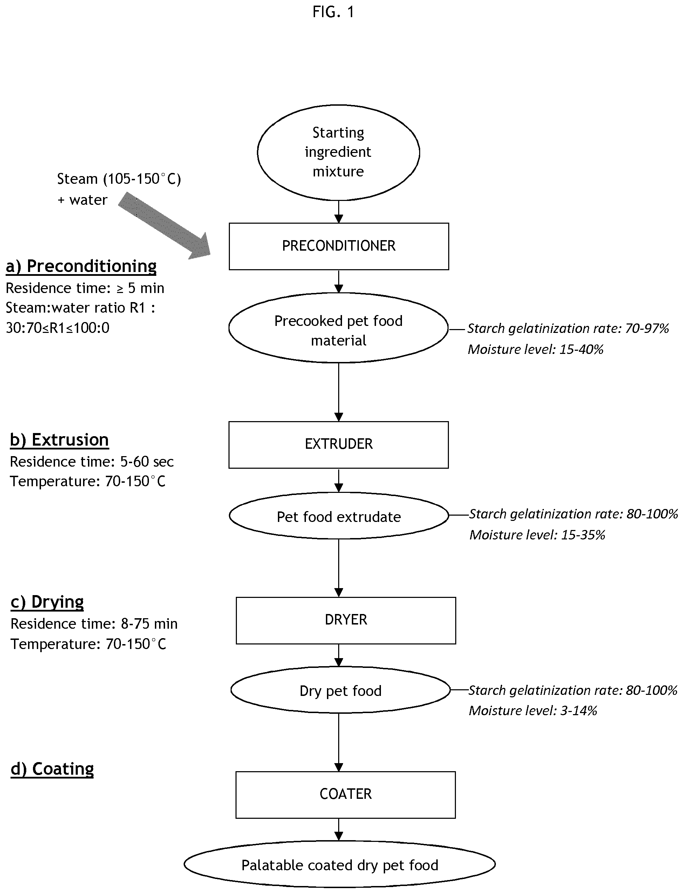

Figure 1: Schematic representation of an embodiment of the method according to the present invention.

DESCRIPTION OF THE INVENTION

DEFINITIONS

Unless specifically stated otherwise, percentages are expressed herein by weight of a product reference (in particular, a pet food product).

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of $\pm 5\%$, more preferably $\pm 2\%$, even more preferably $\pm 1\%$ from the specified value, as such variations are appropriate to reproduce the disclosed methods and products.

As used herein, the term "palatability" or "palatability effect" refers to the overall willingness of a pet to eat a certain pet food. Whenever a pet shows a preference, for example, for one of two or more pet foods, the preferred pet food is more "palatable", and has "enhanced palatability". Such preference can arise from any of the pet's senses, but typically is related to, *inter alia*, taste, aroma, flavour, texture, smell and/or mouth feel.

Different methods exist to determine a palatability effect. Examples of such methods involve exposure of pets to pet foods either simultaneously (for example, in side-by-side, free-choice comparisons, e.g., by measuring relative consumption of at least two different pet foods), or sequentially (e.g., using single bowl testing methodologies). At least two different methods may be used to consolidate the thus obtained results on the palatability effect of a given pet food.

The terms "food", "diet", "pet food", "pet food product", and "food product" as used herein are synonymous. These terms mean a product or composition that is eaten by an animal and provides at least one nutrient to the animal. More specifically, a "food" is here a "nutritionally-balanced food".

A "nutritionally-complete", "nutritionally-balanced" or "complete and nutritionally-balanced food" or "complete diet" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life or promote production, without the addition of supplemental nutritional sources.

The terms "cat food" and "dog food" mean a product intended for consumption by a cat and a dog, respectively.

Pet foods, such as dog foods and cat foods, preferably cat foods, are generally classified depending on their moisture content, which is either low or medium or high. In particular, dry products have less than about 14% moisture. Typical dry pet foods are kibbles.

The term "kibble" used herein refers to particulate chunks or pieces formed by an extrusion process. The pieces can vary in sizes and shapes, depending on the process or the equipment. For instance, kibbles can have spherical, cylindrical, oval, or similar shapes.

"Palatability enhancers" (PEs), or "palatants", or "palatability agents", or "appetizing factors", and any other similar terms mean any material that enhances the palatability of a food product to an animal. A PE may be a single material or a blend of materials, and it may be natural, processed or unprocessed, synthetic, or part of natural and part of synthetic materials. Typically, a PE for animal food is a liquid or dry edible composition that provides a taste, aftertaste, smell, mouth feel, texture, and/or organoleptic sensation that is pleasant to the target animal.

A "pet food ingredient" is any edible compound, composition or material that is suitable for pet consumption.

"Coating", as used herein, refers to the topical deposition of a palatability-enhancing composition onto the surface of a basal food composition, such as by spraying, dusting, and the like. A palatability-enhancing composition for use as a coating material in the pet food industry is typically a mixture of one or more palatability enhancers and fat.

"Inclusion" as used herein, refers to the addition of a palatability enhancer internally to a pet food preparation, by mixing it with other pet food ingredients, before further processing steps for obtaining the final pet food product.

By the term "initial ration", it is meant herein the pet food ration specifically adjusted to a given pet based on its usual food consumption and its daily energy requirements.

By the term "extrusion", it is meant herein the process of forcing a food material to flow under one or more of a variety of conditions (mixing, heating, and shear) through a die which is designed to form the ingredients or foods. Extrusion combines several unit operations including mixing, cooking, kneading, shearing, shaping, and forming.

"Residence time" or "retention time" as used herein refers to the time spent by the ingredient mixture or the materials being processed within the preconditioner and/or the extruder during the course of an extrusion process.

As used herein, the term "starch gelatinization degree" or "starch gelatinization rate" indicates the efficiency of the heat exchanger and how well the product was cooked. This rate can be conveniently expressed in % of gelatinized starch by weight of total starch of the product under consideration.

By "specific mechanical energy (SME)", it is meant herein energy mechanically brought during extrusion by extruder screw configuration, die configuration, and extruder speed.

By "specific thermal energy (STE)", it is meant herein energy thermally brought during preconditioning and/or extrusion mainly by steam and water injections and also by barrel heating sections.

By "moisture level", it is meant herein the amount of water present in a given product mixture. This amount can be conveniently expressed in % by weight of the product mixture under consideration.

DETAILED DESCRIPTION OF THE INVENTION

The present invention is defined in appended claims 1 to 6.

The Inventors have found through an extensive series of process studies, that pets show preferences for food products that are appropriately precooked and extruded, before being dried and coated.

In particular, the Inventors could identify specific working conditions for precooking an incoming starting ingredient mixture in a hydrothermal preconditioner, so as to enhance the palatability of the pet food that is finally obtained after extrusion, drying, and coating.

The present invention concerns a method for producing a palatable coated dry pet food, comprising at least the step of:

a) precooking starting pet food ingredients in a hydrothermal preconditioner, said preconditioner being an elongated vat containing one or two mixing and/or conveying elements consisting of rotating shafts with radial attached paddles, wherein:

- steam and water are injected in said preconditioner at a steam:water ratio R1 from 30:70 to 100:0;

- said ingredients have a residence time in said preconditioner strictly superior to 5 minutes and inferior to 25 minutes;

thereby obtaining a precooked pet food material having a starch gelatinization rate from 70 to 97% by weight;

b) extruding the thus obtained precooked pet food material in an extruder which is either single screw or twin screw extruder, wherein said material has a residence time in said extruder ranging from about 5 to about 60 seconds, thereby obtaining a pet food extrudate having a starch gelatinization rate from 80 to 100% by weight;

c) drying said pet food extrudate resulting from step b) in a dryer, thereby obtaining a dry pet food having a moisture level from 3 to 14% by weight; and

d) coating said dry pet food, thereby obtaining a palatable coated dry pet food.

Starting pet food ingredients (corresponding to the "starting ingredient mixture" in Fig. 1) are fed to the preconditioner. These ingredients can be raw materials and/or partially-processed materials, and/or totally-processed materials. Processing of pet food materials includes physically and/or chemically treatments such as mixing, sifting, grinding, heating, hydrolyzing, and the like.

Non-limiting examples of pet food ingredients are proteins, carbohydrates, fats or lipids, grains, fibers, vitamins, minerals, palatability enhancers, animal digests, amino acids, nutrients, anti-oxidants, preservatives, surfactants, texturing agents, colouring agents, flavours, inorganic phosphate compounds, etc.

The starting pet food ingredients used in step a) contain one or more sources of starch and/or one or more starch-bearing materials. For example, suitable starch sources are, for example, whole grains or grain flours such as corn, rice, wheat, barley, beets, sorghum, tapioca, soy, and oats. In addition, mixtures of these flours and/or whole grains may be used. The flours may be whole flours or may be flours which have had fractions removed. For example, the germ fraction or husk fraction may be removed. Rice flour, corn flour, and wheat flour are particularly suitable, either alone or in combination. The starch source will be chosen largely based on the nutritional value, palatability considerations, and the type of the desired product.

In a preferred embodiment, a pet food is a nutritionally-balanced pet food as defined above. Preferably, a nutritionally-balanced pet food comprises strictly less than 50% (which means that the 50% value is not encompassed), more preferably less than 45%, even more preferably less than 40%, preferably less than 30%, yet even more preferably less than 25%, yet even more preferably strictly less than 25%, yet even more preferably less than 22%, yet even more preferably less than 20% of one or more sources of starch and/or one or more starch-bearing materials, by weight of pet food. In particular, said nutritionally-balanced pet food comprises more than 5% of one or more sources of starch and/or one or more starch-bearing materials, by weight of pet food. Yet in particular, said nutritionally-balanced pet food comprises between 5% and 50%, preferably between 5% and 45%, more preferably between 5% and 40%, even more preferably between 5% and 30%, yet even more preferably between 5% and 25%, yet even more preferably between 5% and 22%, yet even more preferably between 5% and 20% (those limit values being not encompassed) of one or more sources of starch and/or one or more starch-bearing materials, by weight of petfood.

In an embodiment, said starting pet food ingredient mixture used in step a) has a total moisture level from about 7 to about 40% by weight, preferably from 7 to 40% by weight.

Preferably, in step a), steam and water are injected in said preconditioner at a steam:water ratio R1 from 30:70 to about 70:30, more preferably from 30:70 to 70:30, preferably from about 40:60 to about 60:40, yet even more preferably from 40:60 to 60:40. More preferably, in step a), steam and water are injected in said preconditioner at a steam:water ratio R1 of about 50:50, yet more preferably of 50:50.

In an embodiment, said steam in step a) has a temperature from about 105 to about 150°C, preferably from 105 to 150°C, more preferably from about 112 to about 150°C, yet more preferably from 112 to 150°C, even more preferably from about 120 to about 150°C, yet even more preferably from 120 to 150°C.

In an embodiment, said water in step a) has a temperature from about 15 to about 99°C, preferably from 15 to 99°C, more preferably from about 25°C to about 90°C, yet more preferably from 25°C to 90°C, even more preferably from about 50°C to about 80°C, yet even more preferably from 50°C to 80°C.

In step a), said ingredients have a residence time in said preconditioner strictly superior to 5 minutes and inferior to 25 minutes.

The residence time in the preconditioner may vary depending on different parameters such as the length of the preconditioner, the number of preconditioners consisting of two or more equipments installed in cascade, the use of an optional intensification screw of the preconditioner run at different speeds, and the like. The skilled artisan will know how to proceed in practice to determine any appropriate preconditioner design and parameters requested for achieving the targeted residence time.

Preferably, said precooked pet food material resulting from step a) has a starch gelatinization rate from about 74 to about 97% by weight, more preferably from 74 to 97% by weight, even more preferably from about 78 to about 97% by weight, yet even more preferably from 78 to 97% by weight.

Advantageously, said precooked pet food material resulting from step a) has a moisture level from about 15 to about 40% by weight, preferably from 15 to 40% by weight, more preferably from about 18 to about 35% by weight, yet more preferably from 18 to 35% by weight, even more preferably from about 20 to 30% by weight, yet even more preferably from 20 to about 30% by weight.

Precooking step a) of the method according to the present invention is operated in a preconditioner, wherein the incoming material (i.e., the starting ingredient mixture) is appropriately heated, moisturized for a substantial material precooking, in order to (i) optimize subsequent extrusion capacity; (ii) reduce starch damage; (iii) reduce nutritional loss; (iv) enhance palatability; and (v) reduce device wear.

It is not necessarily true that every kind of production lines for dry extruded pet food will have a preconditioner, but for the majority of the pet food processes, a preconditioner is used. A preconditioner is used to properly mix and precook the material before the final cooking stage. Starting ingredient mixture is metered into the preconditioner where they are held in a warm, moist environment before being transferred into the extruder. An efficient mixing of environment contributes to better moisture penetration and hydration of the particles. The preconditioner supplies the extruder with a precooked and hydrated material. The main functions of a preconditioner include mixing of multiple ingredients, hydrating the ingredient mixture, precooking which begins gelatinization of starch.

There are different types of preconditioners such as atmospheric preconditioners, pressurized preconditioners, and the like.

In an atmospheric preconditioner, moisture is uniformly applied in the form of water and/or steam. Water is introduced at the top of the preconditioner using spray nozzles to atomize the water stream thereby reducing the mixing load on the preconditioner. Steam is added from the bottom and the supply plumbing must be designated to supply a continuous flow of condensate free steam.

It is well known by the skilled person that a preconditioner is a device having an elongated vat, which is a mixing chamber comprising at least one inlet orifice for the raw material and at least one outlet orifice for the treated (i.e., preconditioned) material at the opposite ends of the vat, respectively.

Preconditioners contain one or two mixing/conveying elements which consist of rotating shafts with radial attached paddles. Double preconditioners combine two shafts with beaters that may be permanently attached to the shaft or adjustable in terms of pitch and angle. It is known that these essential paddles are designed to agitate the ingredients and, thanks to their incline, to perform an appropriate mixing of the materials contained therein and to gradually move the mixture from the inlet orifice toward the outlet orifice.

The preconditioner in the present invention is an elongated vat containing one or two mixing and/or conveying elements consisting of rotating shafts with radial attached paddles.

The residence time of the ingredients in the preconditioner as mentioned above can easily be achieved by any means known by the skilled person.

To this end, a preconditioner can be advantageously equipped with an additional intensification screw set up in the bottom of the preconditioner that will be used to intensify the mixing capacity, the preconditioner loading level and the residence time. Typically, the preconditioner can include an intensification screw in the bottom of the vat, below and parallel to the shafts and which extends substantially between the inlet and outlet orifices. The intensification screw is provided to be rotated at least opposite to the progression of the ingredients from the inlet orifice toward the outlet orifice, thus increasing the residence time of the ingredients in the mixing chamber of the preconditioner. This intensification screw is thus completely different from screws of extruders, in terms of both structure and functions, the latter screws being provided to be rotated in order to move the ingredients from the inlet orifice toward the outlet orifice of the extruder while compressing the ingredients under pressure (typically from 5 to 80 bars) (see below).

Steam and/or water is (are) generally injected in the preconditioner. Indeed, the vat of the preconditioner may include orifices or injectors for a liquid (for example water) and/or for steam, one or both being designed to heat and moisten the ingredients.

Advantageously, a pressurized preconditioner is used. Pressurized preconditioners are similar to atmospheric preconditioners except with the added ability to operate at pressures ranging from about 300 to about 1050 millibars. Preferably, pressures ranging from 300 to 1050 millibars, more preferably from about 400 to about 900 millibars, yet more preferably from 400 to 900 millibars, are used in the preconditioner. These pressures are achieved by incorporating a pressure lock feeding device at the inlet and discharge of the preconditioner. With this increase in pressure, temperatures of up to about 120°C, preferably up to 120°C, can be obtained that may contribute to starch gelatinization.

The method according to the present invention comprises an extrusion step b). This step typically enables one to generate additional heat, pressure and shear conditions, which finalize the expected cooking and forming of the pet food extrudate.

Preferably, in step b), the thus obtained precooked pet food material has a residence time in the extruder ranging from 5 to 50 seconds, even more preferably from 5 to 40 seconds.

In an embodiment, said extrusion step b) is performed at a temperature from about 70 to about 150°C, preferably from 70 to 150°C, more preferably from about 75 to about 140°C, yet more preferably from 75 to 140°C, even more preferably from about 80 to about 130°C, yet even more preferably from 80 to 130°C.

Preferably, the pet food extrudate resulting from step b) has a starch gelatinization rate from about 85 to about 100% by weight, more preferably from 85 to 100% by weight, yet more preferably from about 90 to about 100% by weight, yet even more preferably from 90 to 100% by weight.

Advantageously, said pet food extrudate resulting from step b) has a moisture level from about 15 to about 35% by weight, yet advantageously from 15 to 35% by weight, more advantageously from about 16 to about 32% by weight, yet more advantageously from 16 to 32% by weight, even more advantageously from about 17 to about 30% by weight and far more advantageously from 17 to 30% by weight.

Extrusion step b) of the method according to the present invention is operated in a single screw or twin screw extruder wherein the precooked pet food material is subjected to appropriate levels of heat, pressure, and shear, with or without injection of steam and/or water inside, in order to produce an extrudate having the desired properties.

The extruder may operate at a pressure ranging from about 5 to about 80 bars, preferably from 5 to 80 bars, more preferably from about 5 to about 70 bars, yet more preferably from 5 to 70 bars, even more preferably from about 5 to about 60 bars, yet even more preferably from 5 to 60 bars.

As the precooked material leaves the preconditioner, it enters the extruder barrel. In this part the major transformation of the preconditioned material occurs which ultimately determines the final product characteristics. This section consists of screws, sleeves, barrel heads and dies. The extruder is either single screw or twin screw extruder. If there are two shafts parallel, it is a twin screw extruder, but if we have only one shaft, it is a single screw extruder.

There are three main processing zones in the extruder barrel: the feeding zone, or inlet zone, where the free flowing material enters, then the kneading zone where the material is worked into amorphous dough, and finally the final cooking zone in which the product is transformed in a visco-amorphous mass.

The extruder barrel assembly combines a rotating extruder shaft on which are set up elements (screw elements and shearlocks), a barrel housing comprised of segmented heated or cooled sections, die plate with holes and knife assembly. The length to diameter ratio of the extruder barrel can be varied. The available screw elements vary depending upon the manufacturer and the application. More than simply transporting the precooked material from the inlet to the die, screw geometry may also contribute to mixing, kneading, heating, and pressure development.

The extruder barrel mainly contributes to bring mechanical energy dissipated through the rotating screw. Nevertheless, some thermal energy may also be added by the direct injection of steam or from external heating sources as barrel sections heating using oil circulation or using electrical tracers. Optional screw elements of different pitch or with interrupted flights, or by adding mixing lobes will contribute to improve shearing, mixing and conveying either in a reverse or forward direction.

A final die plate is set up at the end of the extruder barrel which has two main functions. First function consists in creating a restriction to product flow. This restriction contributes to achieve the required pressure and shear that help to final starch gelatinization. Second function is focused onto the final shaping of the extrudate as the products exit the extruder.

The method according to the present invention further comprises a drying step c), wherein the moisture level of the pet food extrudate resulting from step b) is reduced.

In an embodiment, in step c), said pet food extrudate has a residence time in said dryer ranging from about 8 to about 75 minutes, preferably from 8 to 75 minutes, more preferably from about 10 to about 65 minutes, yet more preferably from 10 to 65 minutes, even more preferably from about 15 to about 60 minutes, yet even more preferably from 15 to 60 minutes.

In an embodiment, said drying step c) is performed at a temperature from about 70 to about 150°C, preferably from 70 to 150°C, more preferably from about 75 to about 140°C, yet more preferably from 75 to 140°C, even more preferably from about 80 to about 130°C, yet even more preferably from 80 to 130°C.

Preferably, the thus obtained dry pet food has a moisture level from3 to about 10% by weight, more preferably from 3 to 10% by weight, yet more preferably from 3 to about 8% by weight, and even more preferably from 3 to 8% by weight.

Advantageously, the thus obtained dry pet food has a starch gelatinization rate from 80 to 100% by weight, preferably from 80 to 100% by weight, more advantageously from about 85 to about 100% by weight, yet more advantageously from 85 to 100% by weight, even more advantageously from about 90 to about 100% by weight and yet even more advantageously from 90 to 100% by weight.

A dryer is used to reduce the level of moisture of an extruded product in order to prevent microbial growth. Different dryers exist, such as horizontal types, vertical types, rotary types, and the like. They may vary in size and configuration. In a horizontal conveyor dryer, common equipment used for drying extruded products, the product is spread on a belt that moves through the dryer. Heated air is passed through the bed of products at a velocity between approximately 40 and 60 meters per minute and an air temperature around from 80°C to 180°C. After the air is circulated through the product, a portion of it is exhausted to carry away the water from the product and the remainder is mixed with fresh incoming air, reheated and passed through the product again. Different parameters determine how the product dries, such as incoming product moisture content, size, density, and the like.

The method according to the present invention further comprises a step d), wherein said dry pet food is coated, thereby obtaining a palatable coated dry pet food.

In the pet food industry, palatability enhancers (PEs) are conventionally used either by inclusion or by coating or both. In the context of the present invention however, one or more PEs are necessarily used by coating. One or more PEs, that is(are) either the same or different from that(those) used by coating, can be further used by inclusion.

For example, PEs can be incorporated or included into the pet food preparation according to the following method. The palatability enhancer(s) is(are) contacted with the starting ingredients of the pet food preparation (corresponding to the "starting ingredient mixture" in Fig. 1) prior to the precooking step a). In this case, the palatability enhancer(s) is(are) combined to proteins, fibre, carbohydrates and/or starch, etc., of the starting mixture and is(are) precooked within the preconditioner.

The palatable dry pet food according to the present invention is coated with a palatability-enhancing composition. Accordingly, in the method of production according to the present invention, the dry pet food resulting from step c) is coated in step d), preferably with at least one palatability-enhancing composition selected from fat, liquid PEs, dry PEs, and combinations thereof.

For example, one can cite a method for coating dry pet foods such as kibbles. Kibbles of uncoated, extruded basal pet food can be placed in a container such a tub or a coating drum for mixing. A fat, such as animal fat and/or vegetable fat, is heated and then sprayed onto the pet food in a manner to obtain a coating of the kibbles. The coating does not need to be a continuous layer, but is preferably uniform. After the fat, one or more PEs may be applied as either liquid(s) or dry powder(s), while mixing the product. A liquid PE is typically sprayed on while a dry PE is typically dusted on. Alternatively, PEs can be mixed with the fat and applied concurrently. Yet alternatively, PEs are coated before deposition of fat.

The dry pet food may be coated with i) fat(s) or oil(s), of animal or vegetable origins, at a rate from about 0 to about 17% by weight, preferably from 0 to 17% by weight, more preferably from about 2 to about 12% by weight, yet more preferably from 2 to 12% by weight, and/or ii) liquid PE(s) at a rate from about 0 to about 7% by weight, preferably from 0 to 7% by weight, more preferably from about 1% to about 5% by weight, yet more preferably from 1% to 5% by weight, and/or iii) dry PE(s) at a rate from about 0 to about 5% by weight, preferably from 0 to 5% by weight, more preferably from about 1% to about 4% by weight, yet more preferably from 1% to 4% by weight, in a sequential or a concomitant way.

In various embodiments, the method according to the present invention further comprises at least one step selected from:

e) cooling down said palatable coated dry pet food obtained in step d);

f) packaging said palatable coated dry pet food resulting from step d) or e); and

g) storing said palatable coated dry pet food resulting from step d) or e) or f).

After being dried and coated, the pet food can be cooled. In some cases, the cooling can be operated after the drying and before the coating, depending on coating products and application levels. Coolers or cooling devices are either vertical or horizontal. Horizontal coolers convey pet food on perforated conveying belts through a tunnel. As the product moves through the tunnel, air flows through the bed of kibbles. The cooling effect depends on external influences such as air temperature, relative air humidity, kibble diameter, and the like.

The dry, cooled kibbles can then be conveyed by the bulk conveyor through packaging apparatus for packaging in a container such as a plastic or plastic-lined paper or aluminium bag, box, bottle, jar, or container which provides protection during storage from moisture gain or loss, and infestation, and also provides a way to identify and label the product. The materials of the bags or containers may be chosen in order to maintain the freshness of the pet food, it will be clear to the skilled artisan based on the context and in light of his general knowledge in the art.

The disclosure describes a palatable coated dry pet food obtainable by a method as described above.

In an embodiment, this palatable coated dry pet food has a moisture level from about 3 to about 14% by weight, preferably from 3 to 14% by weight, more preferably from about 3 to about 10% by weight, yet more preferably from 3 to 10% by weight, even more preferably from about 3 to about 8% by weight, yet even more preferably from 3 to 8% by weight.

In an embodiment, this palatable coated dry pet food has a starch gelatinization rate from about 80 to about 100% by weight, preferably from 80 to 100% by weight, more preferably from about 85 to about 100% by weight, yet more preferably from 85 to 100% by weight, even more preferably from about 90 to about 100% by weight, yet even more preferably from 90 to 100% by weight.

The present disclosure describes a pet food extrudate as an intermediate product in the manufacture of a palatable coated dry pet food, said intermediate product being obtainable by step b) of the method as described herein.

In an embodiment, this extrudate has a moisture level from about 15 to about 35% by weight, preferably from 15 to 35% by weight, more preferably from about 16 to about 32% by weight, yet more preferably from 16 to 32% by weight, even more preferably from about 17 to about 30% by weight, yet even more preferably from 17 to 30% by weight.

In an embodiment, this extrudate has a starch gelatinization rate from about 80 to about 100% by weight, preferably from 80 to 100% by weight, more preferably from about 85 to about 100% by weight, yet more preferably from 85 to 100% by weight, even more preferably from about 90 to about 100% by weight, yet even more preferably from 90 to 100% by weight.

The present disclosure describes a dry pet food as an intermediate product in the manufacture of a palatable coated dry pet food, said intermediate product being obtainable by step c) of the method disclosed herein.

In an embodiment, this dry pet food has a moisture level from about 3 to about 14% by weight, preferably from 3 to 14% by weight, more preferably from about 3 to about 10% by weight, yet more preferably from 3 to 10% by weight, even more preferably from about 3 to about 8% by weight, yet even more preferably from 3 to 8% by weight.

In an embodiment, this dry pet food has a starch gelatinization rate from about 80 to about 100% by weight, preferably from 80 to 100% by weight, more preferably from about 85 to about 100% by weight, yet more preferably from 85 to 100% by weight, even more preferably from about 90 to about 100% by weight, yet even more preferably from 90 to 100% by weight.

In all aspects of the present invention and disclosure, it is generally referred to pet and pet food. Preferably, in all aspects of the present invention and disclosure, said pet food is a cat food or a dog food, yet preferably a cat food.

The final pet foods as well as the intermediate products that can be obtained using all or part of the method of production disclosed herein provide significant advantages over the prior art. The effects of the present invention can be measured by tests such as single-bowl test (also called "monadic test") or "two-bowl test" (also called "versus test"). Of course, the person skilled in the art is free to use any other appropriate test than those herein described to determine preference or acceptability. Such alternative tests are well known in the art.

A- Principle of the monadic feeding trial:

In a "monadic test" or "monadic feeding trial" or "single-bowl test", only one pet food is given to pets at one given time, giving thus access to the acceptability of this specific pet food by the pet. When several pet foods are presented sequentially using monadic testing, the preference for one pet food compared to the other can be established by comparing the sequentially-collected data. With respect to cat foods, tests can be performed on panel of 40 cats, depending on the test's objectives.

A "monadic-based feeding trial" is either a conventional monadic feeding trial or an adjusted monadic feeding trial in order to maximize reliability and sensitivity. Such an adjusted monadic feeding trial can be a monadic feeding trial wherein, e.g.,:

- Meal size is adjusted to individual pet needs (leading to the notion of "initial ration" as defined above); and/or
- Data over more than one meal are collected and processed; and/or
- Food orders are counterbalanced between meals when more than one food is tested.

Operating method of the test for evaluating one pet food:

- An appropriate amount of food is weighed out for each pet and placed in a feeding bowl. The offered amount enables the daily energy requirements of the pet to be met and is adjusted to each pet.

- The bowl is presented to the pet in a feeding system comprising all necessary equipment to collect, automatically or not, and preferably record the relevant data.

- Each pet has free access to its respective distributed food.

- For one pet food, the meal can last from 8 minutes to 24 hours, depending on protocols, and can be repeated over several days and/or several times per day.

- Only one pet food is available to the pet per meal.

Parameters studied: quantities of consumed pet food.

Statistical analysis:

A statistical analysis is performed, preferably a parametric analysis, yet preferably an analysis of variance with mixed effects if data are quantitative and a logistic regression with mixed effects if data are qualitative. Typically, a student's T-test for quantitative data or a chi$^2$ for qualitative data is done from these models to study the differences of each criterion for one pet food.

Typical significance levels for statistical tests are noted as below:

| NS | not significant | ($p > 0.05$) |
|----|-----------------|--------------|
| * | significant | ($p \leq 0.05$) |
| ** | highly significant | ($p \leq 0.01$) |
| *** | very highly significant | ($p \leq 0.001$) |

B- Principle of the two-bowl test:

A "two-bowl test" or "two-pan test" or "versus test" enables one to determine preference of pets for one pet food compared simultaneously to another. A "versus test" is based on the postulate whereby the more food consumed, the more palatable it is. With respect to cat foods, tests can be performed on panel of 40 cats, depending on the test's objectives.

Operating method of the test:

- Identical amounts of food A and food B are weighed out and placed in identical bowls. The amount present in each ration enables the daily requirements of the pets to be met.

- Distribution of the bowls: the bowls are presented at the same time to each cat in an individual loose box and their positions are switched at each meal to avoid a choice led by handedness.

- Duration of the test: from about 8 minutes to about 24 hours (if one of the two bowls is entirely eaten before the end of the test, the two bowls are removed, and the test is stopped).

- Measured parameters: amount of each food consumed by the end of the test;

- Calculated parameters: individual consumption ratio in % (CR)

$$CR_A = \text{consumption of A (g)} \times 100/(\text{consumption of A+B) (g)}$$

$$CR_B = \text{consumption of B (g)} \times 100/(\text{consumption of A+B) (g);}$$

⇨ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis

Statistical analysis is used to determine if there is a significant difference between the 2 ratios. A Student's t-test with 3 error thresholds, namely 5%, 1% and 0.1%, is performed.

Significance levels are noted as below:

| | | |
|---|---|---|
| NS | not significant | $(p > 0.05)$ |
| * | significant | $(p \leq 0.05)$ |
| ** | highly significant | $(p \leq 0.01)$ |
| *** | very highly significant | $(p \leq 0.001)$ |

The present invention will be further described by reference to the following examples, which are presented for the purpose of illustration only and are not intended to limit the scope of the invention.

Summary of the analytic methodology for measuring starch gelatinization rate:

Measurements of starch gelatinization quoted herein are based upon a digestion test with amyloglucosidase.

Hydrolysis of a ground sample using amyloglucosidase enzyme during 45 minutes at 50° Celsius. The hydrolysis makes the starch be reduced in glucose carbohydrates. The glucose is dosed using an enzymatic kit. The total starch is analysed in parallel (NF V18-121 march 1997) in order to calculate the cooked starch / total native starch ratio. The used amyloglucosidase or lucan 1.4- $\alpha$-glucosidase enzyme (EC 3.2.1.3) is produced by Rhizopus Mold. The enzymatic kit contains a hexokinase enzyme (EC 2.7.1.1) and a glucose-6-phosphate deshydrogenase (EC 1.1.1.49).

EXAMPLES

**EXAMPLE 1**: Effect of residence time in the preconditioner

Two nutritionally-balanced food compositions in the form of kibbles, suitable for consumption by cats and obtained after an extrusion process were prepared: "Cat Diet Expe A", and "Cat diet Expe B". Those cat foods were formulated in order to meet the AAFCO nutrient recommendations.

Experimental cat foods, "Cat diet Expe A" (comparative cat food) and "Cat Diet Expe B" were prepared by using the same formulation but by choosing different manufacturing parameters for each one, specifically in the preconditioner. Cat Diets Expe A and B underwent the same extrusion process with the exception of the speed of the intensification screw in the preconditioner, as described in Table 1 below.

For "Cat Diet Expe A", the intensification screw was not operated. For "Cat Diet Expe B", the intensification screw was operated at 50%, this corresponding to 30 rpm.

After the drying step, both dry cat diets obtained were coated with pork fat and a dry palatability enhancer of the commercial range SPF C'SENS®.

Table 1- Experimental conditions of extrusion of "Cat Diet Expe A" and "Cat Diet Expe B"

| | | | Cat diet Expe A (comparative) | Cat Diet Expe B |
|---|---|---|---|---|
| **PRECONDITIONER** | Ingredients Mixture rate planned | kg / h | 250 | 250 |
| | Speed of twin-shaft preconditioner | RPM | 150 | 150 |
| | Intensification screw speed | RPM | 0 | 30 |
| | Water rate in Preconditioner | kg / h | 6 | 6 |
| | Steam rate in Preconditioner | kg / h | 22 | 22 |
| | Effective Steam Pressure | bar | 0,7 | 0,7 |
| | Steam temperature | °C | 115 | 115 |
| | Residence time | min | 3.5 | 7.2 |
| | Temperature Of Mixture Middle of preconditioner | °C | 70 | 80.6 |
| | Temperature Of Mixture End of preconditioner | °C | 64 | 65 |
| | Gelatinization rate | % | 69 | 83 |
| **EXTRUDER** | Extruder Speed of the screw | RPM | 510 | 525 |
| | Water rate in Extruder | kg / h | 3 | 3 |
| | Steam rate in Extruder | kg / h | 0 | 0 |
| | Extruder Amperage | A | 63 | 66 |
| | Extruder Pressure | Bar | 23 | 23 |
| | Extruder die temperature | °C | 108 | 109 |
| | Product density in extruder | g / l | 470 | 475 |
| | Extruder Product moisture end of extruder | % | 25.5 | 26.7 |
| | Estimated residence time | sec | 14 | 14 |
| | specific mechanical energy | Wh / kg | 45.1 | 45.5 |

| | | | | |
|---|---|---|---|---|
| **DRYER** | Temperature set up | °C | 120 | 120 |
| | Product density in Dryer | g/l | 440 | 436 |
| | product moisture End of Dryer | % | 6 | 6 |
| | Gelatinization rate | % | 88.1 | 91.8 |
| | Residence time | min | 30 | 30 |

By changing the speed of the intensification screw, the residence time of the mixture varied. An increase of the speed of the intensification screw led to a rise of residence time. Additionally, an increase of the temperature of the mixture measured at the middle of the preconditioner was also observed.

Palatability tests were thus performed to compare the two Cat diets Experimental A and B to a Cat Food control, known to be a super premium cat food, "Cat Diet Control J".

Versus tests compared the two cat diets A and B to the "Cat Diet Control J". As shown in Table 2, consumptions were statistically different between "Cat Diet Control J" and "Cat Diet Expe A", but not between "Cat Diet Control J" and "Cat Diet Expe B". This shows that a rise of the intensification screw speed to 30 rpm increases cat food palatability.

Table 2 - Versus tests - Results for Cat Diets Expe A and B vs "Cat Diet Control J"

| | day 1 | | | day 2 | | |
|---|---|---|---|---|---|---|
| | average consumption of dry cat food J (%) | average consumption of the dry cat food compared to J (%) | statistical significance | average consumption of dry cat food J (%) | average consumption of the dry cat food compared to J (%) | statistical significance |
| Cat Diet Control J vs Cat Diet Expe A (comparative) | 68 | 32 | ** | 71 | 29 | *** |
| Cat Diet Control J vs Cat Diet Expe B | 62 | 38 | NS | 59 | 41 | NS |

**EXAMPLE 2** Effect of increasing Specific Thermal energy "STE" in the preconditioner by a higher steam injection in the preconditioner

Two nutritionally-balanced food compositions in the form of kibbles, suitable for consumption by cats and obtained after an extrusion process were prepared "Cat Diet expe B" and "Cat diet expe H". Those cat foods were formulated in order to meet the AAFCO nutrient recommendations.

The experimental cat foods, "Cat diet Expe B", "Cat Diet Expe H" were prepared by using the same formulation but by choosing different manufacturing parameters for each one, specifically in the preconditioner, as shown in Tables 3 and 4 below.

After the drying step, both dry cat diets obtained were coated with pork fat and a dry palatability enhancer of the commercial range SPF C'SENS®.

In fact, for "Cat Diet Expe B", a certain amount of steam "QS1" and a certain amount of cold water "QW1" were injected in the preconditioner when some cold water "QW2" was injected into the extruder.

For "Cat Diet Expe H", the amount of water "QW1" injected in the preconditioner for "Cat Diet Expe B" was replaced by some amount of steam "QS2" injected into the preconditioner. Additionally, the initial amount of water "QW2" injected in the extruder for "Cat diet Expe B" was replaced by steam "QS3" injected into the preconditioner. Table 3 below summarizes the modified parameters.

Table 3- Experimental conditions with differences of energy distribution - Cat Diets Expe B and H

| | **Cat Diet Expe B** | | **Cat Diet Expe H** |
|---|---|---|---|
| Steam in preconditioner | QS1 | | QS1 |
| Water in preconditioner | QW1 | Replaced by steam in preconditioner | Steam preconditioner QS2 |
| Water in extruder | QW2 | Replaced by steam in preconditioner | Steam preconditioner QS3 |
| Steam in extruder | 0 | | 0 |
| Total injected cold water | QW1 + QW2 | | 0 |
| Total injected steam in preconditioner | QS1 | | QS1 + QS2 + QS3 |

By a higher injection of steam in the preconditioner, the Specific thermal Energy "STE" increased. Additionally, an increase of the temperature of the mixture measured at the middle and at the end of the preconditioner was also observed. The gelatinization rate was as well increased, as described in Table 4 below.

## Table 4- Experimental conditions of extrusion of Cat Diets Expe B and H

| | | | Cat Diet Expe B | Cat Diet Expe H |
|---|---|---|---|---|
| PRECONDITIONER | Ingredients Mixture rate planned | kg / h | 250 | 250 |
| | Speed of twin-shaft preconditioner | RPM | 150 | 150 |
| | Intensification screw speed | RPM | 30 | 30 |
| | Water rate in Preconditioner | kg / h | 6 | 0 |
| | Steam rate in Preconditioner | kg / h | 22 | 35 |
| | Specific thermal energy increase | | Basal level (=BL) | BL + 60% |
| | Effective Steam Pressure | bar | 0.7 | 0.7 |
| | Steam temperature | °C | 115 | 115 |
| | Residence time | min | 7.2 | 7.2 |
| | Temperature Of Mixture Middle of preconditioner | °C | 80.6 | 95.1 |
| | Temperature Of Mixture End of preconditioner | °C | 65 | 72 |
| | Gelatinization rate | % | 83 | 96 |
| EXTRUDER | Extruder Speed of the screw | RPM | 525 | 490 |
| | Water rate in Extruder | kg / h | 3 | 0 |
| | Steam rate in Extruder | kg / h | 0 | 0 |
| | Extruder Amperage | A | 66 | 73 |
| | Extruder Pressure | Bar | 23 | 28 |
| | Extruder die temperature | °C | 109 | 111 |
| | Product density in extruder | g / l | 475 | 475 |
| | Extruder Product moisture end of extruder | % | 26.7 | 22.8 |
| | Estimated residence time | sec | 14 | 14 |
| | specific mechanical energy | Wh / kg | 45.5 | 48.0 |
| DRYER | Temperature planned | °C | 120 | 120 |
| | Product density in Dryer | g/l | 436 | 451 |
| | product moisture End of Dryer | % | 6 | 6 |
| | Gelatinization rate | % | 91.8 | 95.4 |
| | Residence time | min | 30 | 30 |

The calculation of the ratio Water/Steam in Table 5 below shows that "Cat Diet Expe H" comprised clearly higher total steam rate than "Cat Diet Expe B".

### Table 5- Calculation of ratio of water and steam brought during process

| Calculation ratio Water / Steam | Cat Diet Expe B | Cat Diet Expe H |
|---|---|---|
| % Water in preconditioner / Total mixture rate | 14,7% | 12,0% |
| % Steam preconditioner / total mixture rate | 7,6% | 11,5% |
| % Water in extruder / Total mixture rate | 1,0% | 0,0% |
| % Steam in extruder / Total mixture rate | 0% | 0% |
| % Total Water / total mixture rate | 15,7% | 12,0% |
| % Total Steam / total mixture rate | 7,6% | 11,5% |

Palatability tests were thus performed to compare the 2 Cat diets Experimental B and H.

As shown in Table 6 below, consumptions were statistically different between "Cat Diet Expe B" and "Cat Diet Expe H". This shows that a rise of the STE in the preconditioner increases cat food palatability.

Table 6- Versus tests - Results for "Cat Diet Expe B" vs "Cat Diet Expe H"

| | day 1 | | | day 2 | | |
|---|---|---|---|---|---|---|
| | average consumption of dry cat food B (%) | average consumption of the dry cat H (%) | statistical significance | average consumption of dry cat food B (%) | average consumption of the dry cat H (%) | statistical significance |
| Cat Diet Expe B vs Cat Diet Expe H | 43 | 57 | * | 39 | 61 | * |

## Claims

1.  A method for producing a palatable coated dry pet food, comprising at least the step of:

    a) precooking starting pet food ingredients in a hydrothermal preconditioner, said preconditioner being an elongated vat containing one or two mixing and/or conveying elements consisting of rotating shafts with radial attached paddles, wherein:

    - steam and water are injected in said preconditioner at a steam:water ratio R1 from 30:70 to 100:0;
    - said ingredients have a residence time in said preconditioner strictly superior to 5 minutes and inferior to 25 minutes;

    thereby obtaining a precooked pet food material having a starch gelatinization rate from 70 to 97% by weight;
    b) extruding the thus obtained precooked pet food material in an extruder which is either single screw or twin screw extruder, wherein said material has a residence time in said extruder ranging from 5 to 60 seconds,
    thereby obtaining a pet food extrudate having a starch gelatinization rate from 80 to 100% by weight;
    c) drying said pet food extrudate resulting from step b) in a dryer,
    thereby obtaining a dry pet food having a moisture level from 3 to 14% by weight; and
    d) coating said dry pet food,
    thereby obtaining a palatable coated dry pet food.

2.  The method according to claim 1, wherein said precooked pet food material resulting from step a) has a moisture level from 15 to 40% by weight.

3.  The method according to claim 1 or 2, wherein said pet food extrudate resulting from step b) has a moisture level from 15 to 35% by weight.

4.  The method according to any one of claims 1 to 3, wherein said dry pet food resulting from step c) has a starch gelatinization rate from 80 to 100% by weight.

5.  The method according to any one of claims 1 to 4, wherein said dry pet food is coated in step d) with at least one palatability-enhancing composition selected from fat, liquid palatability enhancers, dry palatability enhancers, and combinations thereof.

6.  The method according to any one of claims 1 to 5 wherein said pet food is a cat food or a dog food, preferably a cat food.

## Patentansprüche

1. Verfahren zum Herstellen eines schmackhaften beschichteten trockenen Tierfutters, das zumindest den folgenden Schritt umfasst:

   a) Vorkochen der Ausgangszutaten des Futters in einer hydrothermalen Vorbehandlungseinrichtung, wobei die Vorbehandlungseinrichtung ein länglicher Bottich ist, der ein oder zwei Misch- und/oder Förderelemente enthält, die aus rotierenden Wellen mit radial befestigten Schaufeln bestehen, wobei:

   - Dampf und Wasser in die Vorbehandlungseinrichtung bei einem Dampf:Wasser-Verhältnis R1 von 30:70 bis 100:0 eingespritzt werden;
   - die Zutaten eine Verweilzeit in der Vorbehandlungseinrichtung von grundsätzlich mehr als 5 Minuten und weniger als 25 Minuten haben;

   dadurch wird ein vorgekochtes Tierfuttermaterial erhalten, das eine Stärke-Gelatinierungsrate von 70 bis 97 Gew-% hat;
   b) Extrudieren des so erhaltenen vorgekochten Tierfuttermaterials in einem Extruder, der entweder ein Einschneckenextruder oder ein Doppelschneckenextruder ist, wobei das Material eine Verweilzeit im Extruder hat, die von 5 bis 60 Sekunden reicht,
   wodurch ein Tierfutter-Extrudat erhalten wird, das eine Stärke-Gelatinierungsrate von 80 bis 100 Gew.-% hat;
   c) Trocknen des Tierfutter-Extrudats, das sich aus Schritt b) ergibt, in einem Trockner,
   wodurch ein trockenes Tierfutter erhalten wird, das einen Feuchtigkeitsgrad von 3 bis 14 Gew.-% hat; und
   d) Beschichten des trockenen Tierfutters,
   wodurch ein schmackhaftes beschichtetes trockenes Tierfutter gewonnen wird.

2. Verfahren nach Anspruch 1, wobei das vorgekochte Tierfuttermaterial, das sich aus Schritt a) ergibt, einen Feuchtigkeitsgrad von 15 bis 40 Gew.-% hat.

3. Verfahren nach Anspruch 1 oder 2, wobei das Tierfutter-Extrudat, das sich aus Schritt b) ergibt, einen Feuchtigkeitsgrad von 15 bis 35 Gew.-% hat.

4. Verfahren nach einem der Ansprüche 1 bis 3, wobei das trockene Tierfutter, das sich aus Schritt c) ergibt, eine Stärke-Gelatinierungsrate von 80 bis 100 Gew.-% hat.

5. Verfahren nach einem der Ansprüche 1 bis 4, wobei das trockene Tierfutter in Schritt d) mit mindestens einer die Schmackhaftigkeit erhöhenden Zusammensetzung beschichtet wird, die aus Fett, flüssigen Geschmacksverstärkern, trockenen Geschmacksverstärkern und Kombinationen derselben ausgewählt wird.

6. Verfahren nach einem der Ansprüche 1 bis 5, wobei das Tierfutter ein Katzenfutter oder ein Hundefutter, vorzugsweise ein Katzenfutter ist.

## Revendications

1. Procédé de production d'un aliment sec pour animaux de compagnie, enrobé et appétent, comprenant au moins les étapes de :

   a) précuisson des ingrédients de départ de l'aliment pour animaux de compagnie dans un préconditionneur hydrothermique, ledit préconditionneur étant une cuve allongée contenant un ou deux éléments de mélange et/ou de transport constitués d'arbres rotatifs pourvus de pales radiales, dans laquelle :

   - de la vapeur et de l'eau sont injectées dans ledit préconditionneur dans un rapport vapeur/eau R1 de 30/70 à 100/0 ;
   - lesdits ingrédients ont un temps de séjour dans ledit préconditionneur strictement supérieur à 5 minutes et inférieur à 25 minutes ;

   de telle sorte qu'une matière alimentaire pour animaux de compagnie précuite ayant un taux de gélatinisation de l'amidon de 70 à 97 % en poids est obtenue ;

b) extrusion de la matière alimentaire pour animaux de compagnie précuite ainsi obtenue dans un extrudeur qui est soit monovis, soit bivis, dans laquelle ladite matière a un temps de séjour dans ledit extrudeur allant de 5 à 60 secondes, de telle sorte qu'un extrudat alimentaire pour animaux de compagnie ayant un taux de gélatinisation de l'amidon de 80 à 100 % en poids est obtenu ;

c) séchage dudit extrudat alimentaire pour animaux de compagnie résultant de l'étape b) dans un sécheur, de telle sorte qu'un aliment sec pour animaux de compagnie ayant un taux d'humidité de 3 à 14 % en poids est obtenu ; et

d) enrobage dudit aliment sec pour animaux de compagnie, de telle sorte qu'un aliment sec pour animaux de compagnie, enrobé et appétent, est obtenu.

2. Procédé selon la revendication 1, dans lequel ladite matière alimentaire pour animaux de compagnie précuite résultant de l'étape a) a un taux d'humidité de 15 à 40 % en poids.

3. Procédé selon la revendication 1 ou 2, dans lequel ledit extrudat alimentaire pour animaux de compagnie résultant de l'étape b) a un taux d'humidité de 15 à 35 % en poids.

4. Procédé selon l'une quelconque des revendications 1 à 3, dans lequel ledit aliment sec pour animaux de compagnie résultant de l'étape c) a un taux de gélatinisation de l'amidon de 80 à 100 % en poids.

5. Procédé selon l'une quelconque des revendications 1 à 4, dans lequel ledit aliment sec pour animaux de compagnie est enrobé dans l'étape d) avec au moins une composition améliorant l'appétence choisie parmi une matière grasse, des facteurs d'appétence liquides, des facteurs d'appétence en poudre, et des combinaisons de ceux-ci.

6. Procédé selon l'une quelconque des revendications 1 à 5, dans lequel ledit aliment pour animaux de compagnie est un aliment pour chats ou un aliment pour chiens, de préférence un aliment pour chats.

FIG. 1

a) Preconditioning
Residence time: ≥ 5 min
Steam:water ratio R1 :
30:70≤R1≤100:0

b) Extrusion
Residence time: 5-60 sec
Temperature: 70-150°C

c) Drying
Residence time: 8-75 min
Temperature: 70-150°C

d) Coating

Steam (105-150°C) + water

Starting ingredient mixture

PRECONDITIONER

Precooked pet food material — *Starch gelatinization rate: 70-97%* *Moisture level: 15-40%*

EXTRUDER

Pet food extrudate — *Starch gelatinization rate: 80-100%* *Moisture level: 15-35%*

DRYER

Dry pet food — *Starch gelatinization rate: 80-100%* *Moisture level: 3-14%*

COATER

Palatable coated dry pet food

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5997934 A1
- EP 1219177 A1

- US 7749552 B1

**Non-patent literature cited in the description**

- **CARCIOFI ; 2012 et al.** *Animal Feed Science and Technology,* vol. 177, 211-217